(19) Europäisches Patentamt
European Patent Office
Office européen des brevets

(11) **EP 3 637 194 B1**

(12) **FASCICULE DE BREVET EUROPEEN**

(45) Date de publication et mention
de la délivrance du brevet:
**03.11.2021 Bulletin 2021/44**

(51) Int Cl.:
**G03H 1/00** *(2006.01)* **G03H 1/08** *(2006.01)*
**G03H 1/04** *(2006.01)* G01N 15/02 *(2006.01)*
G01N 15/10 *(2006.01)* G01N 15/14 *(2006.01)*

(21) Numéro de dépôt: **19201746.5**

(22) Date de dépôt: **07.10.2019**

(54) **PROCÉDÉ DE DÉTERMINATION DE PARAMÈTRES D'UNE PARTICULE**

VERFAHREN ZU BESTIMMUNG DER PARAMETER EINES TEILCHENS

METHOD FOR DETERMINING PARAMETERS OF A PARTICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.10.2018 FR 1859362**

(43) Date de publication de la demande:
**15.04.2020 Bulletin 2020/16**

(73) Titulaire: **Commissariat à l'Énergie Atomique
et aux Énergies Alternatives
75015 Paris (FR)**

(72) Inventeurs:
• **ALLIER, Cédric
38054 Cedex 09 GRENOBLE (FR)**
• **HERVE, Lionel
38054 Cedex 09 GRENOBLE (FR)**
• **JOLY, Pierre
38054 Cedex 09 GRENOBLE (FR)**

(74) Mandataire: **Le Goaller, Christophe
Innovation Competence Group
310 avenue Berthelot
69372 Lyon Cedex 08 (FR)**

(56) Documents cités:
**WO-A1-2017/178723 US-A1- 2014 333 935**

• **OLIVIER THOMAS ET AL: "Optimizing phase
object reconstruction using an in-line digital
holographic microscope and a reconstruction
based on a Lorenz-Mie model", PROCEEDINGS
OF SPIE; [PROCEEDINGS OF SPIE ISSN
0277-786X VOLUME 10524], SPIE, US, vol. 10677,
24 mai 2018 (2018-05-24), pages
106772J-106772J, XP060109011, DOI:
10.1117/12.2311321 ISBN: 978-1-5106-1533-5**
• **STIJN VANDEWIELE ET AL: "Low coherence
digital holography microscopy based on the
Lorenz-Mie scattering model", OPTICS
EXPRESS, vol. 25, no. 21, 16 octobre 2017
(2017-10-16), page 25853, XP055579686, US ISSN:
2161-2072, DOI: 10.1364/OE.25.025853**
• **A. ANAND ET AL: "Automatic Identification of
Malaria-Infected RBC With Digital Holographic
Microscopy Using Correlation Algorithms", IEEE
PHOTONICS JOURNAL, vol. 4, no. 5, 1 octobre
2012 (2012-10-01) , pages 1456-1464,
XP055037938, ISSN: 1943-0655, DOI:
10.1109/JPHOT.2012.2210199**

EP 3 637 194 B1

**Description**

## DOMAINE TECHNIQUE

Le domaine technique de l'invention est la caractérisation de particules, par exemple des particules biologiques, à partir d'une image.

## ART ANTERIEUR

L'imagerie holographique connaît, depuis plusieurs années, des développements importants, en particulier dans le domaine de l'analyse d'échantillons. Un grand nombre d'applications ont été décrites, pour caractériser des échantillons, en particulier des échantillons destinés à des applications en biologie ou pour du diagnostic. De nombreuses publications concernent par exemple des échantillons comportant des particules, l'objectif étant de caractériser les particules.

De façon usuelle, on forme une image d'un échantillon, désignée par le terme hologramme, et un opérateur de propagation holographique est appliqué à l'image. L'image de l'échantillon peut être acquise selon une configuration dite défocalisée, comme décrit dans le document WO2016/097092. Dans ce document, on décrit un procédé d'imagerie selon une configuration défocalisée, pour identifier un microorganisme, à partir d'une image d'un échantillon acquise par un capteur d'image décalé par rapport à un plan de mise au point d'un système optique. Un opérateur de propagation holographique est alors appliqué à l'image défocalisée.

Le document Thomas O. "Optimizing phase object reconstruction using an in-line digital holographic microscope and a reconstruction based on a Lorenz-Mie model", SPIE, US, vol. 10677, 24 may 2018, décrit un procédé pour analyser des particules, selon lequel on compare un hologramme, formé dans le plan de l'échantillon, acquis selon une configuration défocalisée, avec une figure de diffraction modélisée par un modèle théorique, en l'occurrence le modèle de Lorentz-Mie.

Selon une autre configuration, l'image de l'échantillon peut être acquise selon une configuration d'imagerie sans lentille, aucune optique de formation d'image n'étant disposée entre l'échantillon et le capteur d'image. Le document WO2016/151249 décrit un procédé d'analyse de cellules, disposées dans un milieu de culture, sans marquage. Le document WO2016/151248 décrit un procédé pour identifier des particules, par exemple des particules sanguines. Les procédés décrits dans ces documents sont basés sur l'établissement d'un profil, représentant une évolution, le long d'un axe optique, d'une grandeur caractéristique d'une onde lumineuse d'exposition, à laquelle est exposé le capteur d'image. Généralement, à chaque particule de l'échantillon est associé un profil. La particule est caractérisée en comparant le profil à des profils étalons, ces derniers étant obtenus de façon expérimentale, en mettant en œuvre des échantillons dont les particules ont des caractéristiques connues. Le document WO2017178723 décrit également un procédé de caractérisation de particules à partir de profils axiaux, c'est-à-dire établis selon l'axe de propagation de la lumière.

Les documents précédemment évoqués sont basés sur une analogie entre un profil établi en appliquant un opérateur de reconstruction holographique à une image d'échantillon, et une série de profils étalons, obtenus expérimentalement. Afin d'obtenir une reconstruction holographique de bonne qualité, l'image de l'échantillon peut faire l'objet d'un algorithme de reconstruction itératif. Des algorithmes de reconstruction itératifs sont par exemple décrits dans WO2016189257 ou dans WO2017162985. Les procédés préalablement décrits supposent que les profils mesurés à partir de l'échantillon et les profils étalons soient préférentiellement établis en mettant en œuvre le même algorithme de reconstruction holographique. De plus, il est préférable, sans pour autant que cela soit nécessaire, que les profils étalons soient obtenus dans des conditions expérimentales les plus proches possibles des conditions dans lesquelles l'image de l'échantillon est formée. Les conditions expérimentales sont par exemple le type de source de lumière, le type de capteur, la taille des pixels, la distance entre le capteur et l'échantillon.

Les inventeurs ont cherché à perfectionner les procédés décrits ci-avant, de façon à être moins liés aux conditions expérimentales et à l'algorithme mis en œuvre pour établir les profils étalons.

## EXPOSE DE L'INVENTION

Un premier objet de l'invention est un procédé de détermination d'un paramètre d'une particule présente dans un échantillon, l'échantillon s'étendant entre un capteur d'image et une source de lumière, le capteur d'image s'étendant selon un plan de détection, le procédé comportant les étapes suivantes :

    a) illumination de l'échantillon par la source de lumière, la source de lumière émettant une onde lumineuse incidente se propageant selon un axe de propagation;
    b) acquisition d'une image de l'échantillon par le capteur d'image, le capteur d'image étant exposé à une onde lumineuse d'exposition;

c) détermination d'une position de la particule dans le plan de détection ou dans un plan parallèle au plan de détection ;

d) à partir de l'image acquise, application d'un opérateur de propagation, selon une pluralité de distances du plan de détection, de façon à estimer, à chaque distance, une amplitude complexe de l'onde lumineuse d'exposition ;

e) à partir de l'amplitude complexe estimée, en différentes distances, obtention d'un profil représentant une évolution d'une propriété de l'onde lumineuse d'exposition selon un axe parallèle à l'axe de propagation et passant par la position de la particule.

La particule est associée à un ensemble de paramètres, comportant au moins une taille de la particule et un indice de réfraction de la particule.

Le procédé comporte :

f) une modélisation d'une particule, prenant en compte une valeur de chaque paramètre de l'ensemble de paramètres, et une modélisation d'une onde lumineuse d'exposition, se propageant vers le capteur d'image, sous l'effet d'une illumination, par la source de lumière de la particule modélisée ;

g) à partir de l'onde lumineuse d'exposition modélisée, formation d'un profil représentant une évolution de l'amplitude complexe de l'onde lumineuse d'exposition modélisée, selon un axe parallèle à l'axe de propagation;

h) comparaison entre le profil obtenu lors de l'étape e) et le profil modélisé résultant de l'étape g), de façon à déterminer la valeur d'au moins un paramètre de la particule.

Selon un mode de réalisation, l'indice de réfraction est une grandeur complexe : il comporte une partie réelle et une partie imaginaire.

Selon un mode de réalisation, l'ensemble de paramètres comporte également une position de la particule selon l'axe de propagation.

Selon un mode de réalisation, l'étape f) comporte des modélisations de particules présentant respectivement différentes valeurs d'au moins un paramètre, de façon à obtenir, suite à l'étape g), une base de données de profils modélisés, à chaque profil modélisé étant associé un ensemble de paramètres. L'étape h) peut comporter une minimisation d'un écart entre le profil résultant de l'étape e) et les profils de la base de données, les valeurs respectives des paramètres de la particule étant celles minimisant l'écart. L'écart peut être un écart quadratique.

Selon un mode de réalisation, les étapes f) à h) sont effectuées de façon itérative, la valeur d'un paramètre de la particule résultant d'une itération étant utilisée pour initialiser une itération suivante. Le paramètre peut être l'indice de réfraction, et/ou la taille et/ou une distance par rapport au plan de détection.

Selon un mode de réalisation, l'étape f) comporte des modélisations de particules de différentes tailles et/ou de différents indices de réfraction, de façon à obtenir, suite à l'étape g), une base de données de profils modélisés, à chaque profil modélisé étant associé une taille et/ou un indice de réfraction. L'étape h) peut comporter une détermination de la taille de la particule et/ou de l'indice de réfraction de la particule.

Selon un mode de réalisation, l'étape f) comporte des modélisations de particules situées à différentes distances du plan de détection, de façon à obtenir, suite à l'étape g) une base de données de profils modélisés, chaque profil modélisé étant associé à une distance par rapport au plan de détection. L'étape h) peut comporter une détermination de la distance entre la particule et le plan de détection.

Selon un mode de réalisation, les étapes f) à h) sont mises en œuvre de façon itérative, de telle sorte qu'au cours de chaque itération, le profil modélisé lors de l'étape g) se rapproche progressivement du profil déterminé lors de l'étape e). Selon ce mode de réalisation, l'étape h) d'une itération peut comporter une détermination d'un écart entre le profil modélisé lors de l'étape g) de la même itération et le profil résultant de l'étape e), ainsi qu'une détermination d'un gradient de l'écart en fonction d'au moins un paramètre de l'ensemble de paramètres, de façon à déterminer les valeurs des paramètres de la particule modélisée lors de l'étape f) de l'itération suivante.

Quel que soit le mode de réalisation, le procédé peut comporter :

- une application d'un opérateur de propagation à l'image acquise, en considérant plusieurs distances par rapport au plan de détection, de façon à obtenir une pile d'images reconstruites, à chaque image reconstruite étant associée une distance par rapport au plan de détection ;
- à partir d'une image reconstruite, une estimation d'une taille de la particule ;

de telle sorte que lors de l'étape h) comporte une prise en compte de la taille de la particule estimée à partir de l'image reconstruite. L'image reconstruite, sur la base de laquelle l'estimation de la taille de la particule est effectuée, est de préférence une image reconstruite dans un plan de reconstruction passant par la particule. Une telle image forme une image d'observation de la particule. La position du plan de reconstruction correspondant à l'image d'observation peut être déterminée par la mise en œuvre d'un algorithme de focalisation numérique.

EP 3 637 194 B1

Quel que soit le mode réalisation, l'étape h) peut comprendre une détermination d'un profil modélisé le plus proche du profil résultant de l'étape e). Les valeurs des paramètres de la particule correspondent alors respectivement aux valeurs des paramètres associés au profil modélisé le plus proche, c'est-à-dire aux valeurs des paramètres de la particule modélisée ayant permis d'obtenir le profil modélisé le plus proche.

La particule peut notamment être une cellule, le procédé comportant une détermination d'un état de vie ou de mort de la cellule en fonction de l'indice de réfraction. De préférence, l'indice de réfraction comporte une partie réelle et une partie imaginaire, l'état de vie ou de mort de la cellule étant défini en fonction d'une comparaison entre la partie réelle et la partie imaginaire.

Selon un mode de réalisation, il n'y a pas d'optique de formation d'image entre l'échantillon et le capteur d'image. Selon un autre mode de réalisation, un système optique s'étend entre l'échantillon et le capteur d'image, le système optique définissant un plan image et un plan objet, et dans lequel lors de l'étape b), l'image est acquise selon une configuration défocalisée, le plan de détection étant décalé par rapport au plan image, et/ou un plan de l'échantillon, selon lequel s'étend l'échantillon, étant décalé par rapport au plan objet.

Un autre objet de l'invention est un dispositif d'observation d'un échantillon, l'échantillon comportant des particules, le dispositif comportant :

- une source de lumière, configurée pour illuminer l'échantillon ;
- un support d'échantillon, configuré pour recevoir l'échantillon ;
- un capteur d'image, disposé de telle sorte que lorsque l'échantillon est disposé sur le support, il s'étend entre le capteur d'image et la source de lumière, le capteur d'image étant configuré pour acquérir une image de l'échantillon ;
- un processeur, configuré pour mettre en oeuvre les étapes d) à h) d'un procédé selon le premier objet de l'invention, à partir d'une image acquise par le capteur d'image.

Selon un mode de réalisation, aucune optique de formation d'image n'est disposée entre le capteur d'image et le processeur. Selon un autre mode de réalisation, le dispositif comporte un système optique s'étendant entre l'échantillon et le capteur d'image, le système optique définissant un plan image et un plan objet, le dispositif comportant un moyen d'ajustement du système optique, ou de l'échantillon, ou du capteur d'image, de telle sorte que :

- le plan de détection soit décalé du plan image ;
- et/ou le plan objet soit décalé d'un plan d'échantillon, selon lequel s'étend l'échantillon.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1 montre un dispositif permettant une mise en œuvre de l'invention.
Les figures 2A à 2F sont des résultats de modélisation d'une figure de diffraction ou de profils correspondant à des cellules dont les paramètres sont connus. Il en est de même des figures 3A à 3F.
Les figures 4A à 4D schématisent les principales étapes de différents modes de réalisation.
Les figures 5A à 5C illustrent une détermination de paramètres d'une cellule.
Les figures 6A et 6B montrent l'évolution d'une erreur de quantification affectant respectivement les estimations de la partie réelle et de la partie imaginaire de l'indice de réfraction en fonction de la taille de particules.
La figure 7 montre un exemple d'application de l'invention à la classification de cellules vivantes et de cellules mortes.
La figure 8 montre un autre dispositif permettant une mise en œuvre de l'invention.

## EXPOSE DE MODES DE REALISATION PARTICULIERS

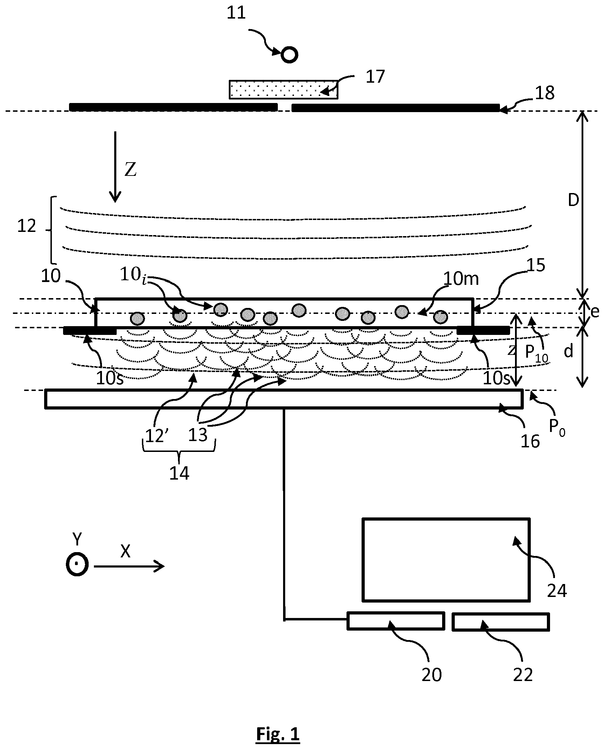

La figure 1 représente un exemple de dispositif selon l'invention. Une source de lumière 11 est apte à émettre une onde lumineuse 12, dite onde lumineuse incidente, se propageant en direction d'un échantillon 10, selon un axe de propagation Z. L'onde lumineuse est émise selon une bande spectrale d'illumination $\Delta\lambda$.

L'échantillon 10 est un échantillon que l'on souhaite caractériser. Il comprend notamment un milieu 10m dans lequel baignent des particules $10_i$. Le milieu 10m peut être un milieu liquide. Il peut comprendre un liquide corporel, obtenu par exemple à partir de sang ou d'urine ou de lymphe ou de liquide céphalorachidien. Il peut également s'agir d'un milieu de culture, comportant des nutriments permettant le développement de microorganismes ou de cellules. Par

4

particule, on entend notamment, et de façon non exhaustive :

- une cellule, qu'il s'agisse d'une cellule de culture ou une cellule corporelle, par exemple une cellule sanguine ;
- un microorganisme, par exemple une bactérie ou une levure ou une microalgue ;
- une particule solide, par exemple une microbille, la microbille pouvant être fonctionnalisée, de façon à favoriser un greffage avec un analyte ;
- une particule formant une émulsion dans le milieu 10m, en particulier une particule insoluble dans le milieu 10m, un exemple étant une gouttelette lipidique dans un milieu aqueux.

Une particule $10_i$ peut être solide ou liquide.

L'échantillon 10 est, dans cet exemple, contenu dans une chambre fluidique 15. La chambre fluidique 15 est par exemple une chambre fluidique de type Gene Frame® d'épaisseur e=250 $\mu$m. L'épaisseur e de l'échantillon 10, selon l'axe de propagation, varie typiquement entre 10 $\mu$m et 1 cm, et est de préférence comprise entre 20 $\mu$m et 500 $\mu$m. L'échantillon s'étend selon un plan $P_{10}$, dit plan de l'échantillon, perpendiculaire à l'axe de propagation Z. Le plan de l'échantillon est défini par les axes X et Y représentés sur la figure 1. L'échantillon est maintenu sur un support 10s à une distance d d'un capteur d'image 16. La concentration de particules peut varier entre 50 par microlitre et 500 000 par microlitre. Elle peut être par exemple égale à 100000 par microlitre.

La distance $D$ entre la source de lumière 11 et la chambre fluidique 15 est de préférence supérieure à 1 cm. Elle est de préférence comprise entre 2 et 30 cm. Avantageusement, la source de lumière 11, vue par l'échantillon, est considérée comme ponctuelle. Cela signifie que son diamètre (ou sa diagonale) est préférentiellement inférieur au dixième, mieux au centième de la distance entre la chambre fluidique 15 et la source de lumière. Sur la figure 1, la source de lumière est une diode électroluminescente. Elle est généralement associée à un diaphragme 18, ou filtre spatial. L'ouverture du diaphragme est typiquement comprise entre 5 $\mu$m et 1 mm, de préférence entre 50 $\mu$m et 500 $\mu$m. Dans cet exemple, le diaphragme est fourni par Thorlabs sous la référence P150S et son diamètre est de 150 $\mu$m. Le diaphragme peut être remplacé par une fibre optique, dont une première extrémité est placée face à la source de lumière 11 et dont une deuxième extrémité est placée en regard de l'échantillon 10. Le dispositif représenté sur la figure 1 comporte également un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par une source de lumière élémentaire 11 selon un cône d'angle a. De préférence, l'angle de diffusion a varie entre 10° et 80°.

Alternativement, la source de lumière peut être une source laser, telle une diode laser. Dans ce cas, il n'est pas utile de lui associer un filtre spatial ou un diffuseur.

De préférence, la bande spectrale d'émission $\Delta\lambda$ de l'onde lumineuse incidente 12 a une largeur inférieure à 100 nm. Par largeur de bande spectrale, on entend une largeur à mi-hauteur de ladite bande spectrale.

L'échantillon 10 est disposé entre la source de lumière 11 et le capteur d'image 16 précédemment évoqué. Le capteur d'image 16 définit un plan de détection $P_0$, s'étendant de préférence parallèlement, ou sensiblement parallèlement au plan $P_{10}$ selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise.

Le capteur d'image 16 est apte à former une image $I_0$ de l'échantillon 10 selon le plan de détection $P_0$. Dans l'exemple représenté, il s'agit d'un capteur d'image 16 comportant une matrice de pixels, de type CCD ou un CMOS. Le plan de détection $P_0$ s'étend de préférence perpendiculairement à l'axe de propagation Z de l'onde lumineuse incidente 12. La distance d entre l'échantillon 10 et la matrice de pixels du capteur d'image 16 est préférentiellement comprise entre 50 $\mu$m et 2 cm, de préférence comprise entre 100 $\mu$m et 2 mm.

On remarque, dans ce mode de réalisation, l'absence d'optique de grossissement ou de formation d'image entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grandissement de l'image acquise par le capteur d'image, leur fonction étant d'optimiser l'efficacité de détection.

La source de lumière 11 peut comporter des sources de lumières élémentaires, émettant selon différentes bandes spectrales. Le capteur d'image est alors configuré pour acquérir, simultanément ou successivement, une image $I_0$ dans chaque bande spectrale. Ainsi, le terme image $I_0$ acquise par le capteur d'image peut désigner un ensemble d'images acquises dans différentes bandes spectrales, suite à l'illumination de l'échantillon dans les différentes bandes spectrales.

Comme évoqué dans les demandes citées dans l'art antérieur, sous l'effet de l'onde lumineuse incidente 12, les particules $10_i$ présentes dans l'échantillon peuvent engendrer une onde diffractée 13, susceptible de produire, au niveau du plan de détection $P_0$, des interférences, en particulier avec une partie 12' de l'onde lumineuse incidente 12 transmise par l'échantillon. Par ailleurs, l'échantillon peut absorber une partie de l'onde lumineuse incidente 12. Ainsi, l'onde lumineuse 14, transmise par l'échantillon, et à laquelle est exposé le capteur d'image 16, désignée par le terme "onde lumineuse d'exposition", peut comprendre :

- une composante 13 résultant de la diffraction de l'onde lumineuse incidente 12 par chaque particule de l'échantillon ;
- une composante 12' résultant de la transmission de l'onde lumineuse incidente 12 par l'échantillon, une partie de cette dernière pouvant être absorbée dans l'échantillon.

Ces composantes forment des interférences dans le plan de détection. Aussi, chaque image acquise par le capteur d'image comporte des figures d'interférences (ou figures de diffraction), chaque figure d'interférence pouvant être associée à une particule $10_i$ de l'échantillon.

Un processeur 20, par exemple un microprocesseur, est apte à traiter chaque image $I_0$ acquise par le capteur d'image 16. En particulier, le processeur est un microprocesseur relié à une mémoire programmable 22 dans laquelle est stockée une séquence d'instructions pour effectuer les opérations de traitement d'images et de calculs décrites dans cette description. Le processeur peut être couplé à un écran 24 permettant l'affichage d'images acquises par le capteur d'image 16 ou calculées par le processeur 20.

Une image $I_0$ acquise par le capteur d'image 16, également appelée hologramme, peut faire l'objet d'une reconstruction, dite reconstruction holographique. Comme décrit en lien avec l'art antérieur, on peut appliquer, à l'image acquise par le capteur d'image, un opérateur de propagation holographique $h$, de façon à calculer une amplitude complexe $A(x,y,z)$ représentative de l'onde lumineuse d'exposition 14, et cela en tout point de coordonnées $(x,y,z)$ de l'espace, et plus particulièrement entre le capteur d'image et l'échantillon. Les coordonnées $(x,y)$ désignent des coordonnées, dites coordonnées radiales, parallèlement au plan de détection $P_0$. La coordonnée $z$ est une coordonnée selon l'axe de propagation $Z$, traduisant une distance entre l'échantillon 10 et le capteur d'image 16.

L'amplitude complexe peut être obtenue par une des expressions suivantes :

$$A(x,y,z) = I_0(x,y,z) * h \quad ,$$

\* désignant l'opérateur produit de convolution, ou, et de préférence,

$$A(x,y,z) = \sqrt{I_0(x,y,z)} * h,$$

ou encore :

$$A(x,y,z) = \frac{\sqrt{I_0(x,y,z)}}{\overline{I_0}} * h,$$

$\overline{I_0}$ étant une moyenne de l'image acquise.

L'opérateur de propagation $h$ a pour fonction de décrire la propagation de la lumière entre le capteur d'image 16 et un point de coordonnées $(x,y,z)$, situé à une distance $|z|$ du capteur d'image.

Il est alors possible de déterminer une propriété de l'onde lumineuse d'exposition 14, par exemple le module $M(x,y,z)$ et/ou la phase $\varphi(x,y,z)$, à la distance $|z|$ avec :

$$M(x,y,z) = abs\,[A(x,y,z)] \, ;$$

$$\varphi(x,y,z) = arg\,[A(x,y,z)] \, ;$$

Les opérateurs *abs* et *arg* désignent respectivement le module et l'argument.

La distance $|z|$ est une distance de reconstruction.

L'opérateur de propagation est par exemple la fonction de Fresnel-Helmholtz, telle que :

$$h(x,y,z) = \frac{1}{j\lambda z} e^{j2\pi\frac{z}{\lambda}} \exp(j\pi\frac{x^2+y^2}{\lambda z}).$$

L'expression complexe $A(x,y,z)$ de l'onde lumineuse 14, en tout point de coordonnées $(x,y,z)$ de l'espace, est telle que : $A(x,y,z) = M(x,y,z)e^{j\varphi(x,y,z)}$.

L'expression complexe $A$ est une grandeur complexe dont l'argument et le module sont respectivement représentatifs de la phase et de l'intensité de l'onde lumineuse d'exposition 14 détectée par le capteur d'image 16 pour former l'image $I_0$.

En déterminant l'amplitude complexe, pour une même position radiale $(x, y)$, le long de l'axe Z, selon une pluralité de coordonnées $z$, il est possible de former un profil représentatif de l'onde lumineuse d'exposition. Il peut s'agir d'un profil de la phase ou du module de l'onde lumineuse d'exposition. De façon générale, il s'agit d'un profil d'une propriété optique de l'onde lumineuse d'exposition, le terme propriété optique désignant une propriété obtenue à l'aide de l'amplitude complexe $A(x,y,z)$, et représentative de cette dernière. Il peut s'agir du module, de la phase, de la partie réelle, de la partie imaginaire, ou de leurs combinaisons.

Selon un mode de réalisation, on applique un produit de convolution de l'image $I_0$ par l'opérateur de propagation $h$. Cela permet d'obtenir une image complexe $A_z$ représentant une distribution spatiale de l'expression complexe A dans un plan de reconstruction $P_z$, s'étendant à une distance $|z|$ du plan de détection $P_0$. Dans cet exemple, le plan de détection $P_0$ a pour équation $z = 0$. L'image complexe $A_z$ correspond à une image complexe de l'échantillon dans le plan de reconstruction $P_z$. Elle représente également une distribution spatiale bidimensionnelle des propriétés optiques de l'onde lumineuse d'exposition 14. Un tel procédé, désigné par le terme reconstruction holographique, permet notamment de reconstruire une image du module ou de la phase de l'onde lumineuse d'exposition 14 dans le plan de reconstruction

Il est possible de former des images $M_z$ et $\varphi_z$ représentant respectivement le module ou la phase d'une image complexe complexe $A_z$ dans un plan $P_z$ situé à une distance $|z|$ du plan de détection $P_0$, avec $M_z = \text{mod}(A_z)$ et $\varphi_z = \arg(A_z)$. Lorsque le plan de reconstruction correspond à un plan selon lequel s'étend l'échantillon, les images $M_z$ et $\varphi_z$ permettent une observation de l'échantillon avec une résolution spatiale correcte.

Lorsque des images complexes $A_z$ sont formées selon différentes distances de reconstruction, on obtient une pile d'images complexes $A_{z_1} ... A_{z_n}$, chaque image complexe étant définie selon des coordonnées radiales $(x,y)$, respectivement à des distances de reconstruction $z_1 ... z_n$ par rapport au plan de détection. Chaque image complexe $A_z$ de la pile d'images $A_{z_1} ... A_{z_n}$ correspond à une distance de reconstruction z. A partir de la valeur de chaque image complexe en une coordonnée radiale $(x_i, y_i)$, correspondant à une particule $10_i$, on peut obtenir la valeur d'une propriété optique selon les différentes distances de reconstruction, dont l'interpolation permet de former un profil $F_{xi,yi}$. Lorsque la propriété optique considérée est le module, le profil $F_{x_i,y_i}$ est noté $M_{x_i,y_i}$. Lorsque la propriété optique considérée est la phase, le profil $F_{x_i,y_i}$ est noté $\varphi_{x_i,y_i}$. Le profil correspond à une évolution de la propriété optique selon un axe parallèle à l'axe de propagation Z, et passant par la coordonnée radiale $(x_i,y_i)$ de la particule $10_i$.

Les images complexes $A_{z_1} ... A_{z_n}$ peuvent être formées en utilisant un algorithme de reconstruction holographique itératif, tel que décrit dans WO2016189257 ou dans WO2017162985. Selon de tels algorithmes, on ajuste progressivement la phase de l'onde lumineuse d'exposition, dans le plan de détection. Dans WO2016189257, l'ajustement de la phase est effectué par itérations en moyennant, au cours de chaque itération, la phase d'ondes lumineuses reconstruites dans le plan de l'échantillon, selon différentes bandes spectrales. Dans WO2017162985, l'ajustement de la phase est effectué par itération de façon à minimiser, lors de chaque itération, le bruit de reconstruction d'une image complexe reconstruite dans le plan de l'échantillon.

Selon une première possibilité, décrite dans WO2017050672, une pile d'images complexes $A_{z_1} ... A_{z_n}$ est obtenue en mettant en oeuvre un algorithme itératif de reconstruction à partir d'une image $I_0$ acquise par le capteur d'image. L'algorithme itératif est appliqué de façon à reconstruire une image complexe, dite image complexe de référence $A_{10}$, dans le plan de l'échantillon $P_{10}$. On suppose que l'image complexe de référence $A_{10}$ forme un bon descripteur de l'onde lumineuse d'exposition 14. Elle comporte en particulier des estimations fiables du module et à la phase de l'onde lumineuse d'exposition 14 dans le plan de l'échantillon $P_{10}$. Les autres images complexes formant la pile d'images $A_{z_1} ... A_{z_n}$ sont obtenues par une simple convolution de l'image complexe de référence $A_{10}$ par un opérateur de propagation $h$ tel que précédemment décrit.

Selon une autre possibilité, chaque image complexe $A_z$ de la pile d'images $A_{z_1} ... A_{z_n}$ est obtenue par application successive d'un algorithme itératif de reconstruction à partir de l'image $I_0$ acquise par le capteur d'image, en considérant les différentes distances de reconstruction $z_1 ... z_n$.

Le recours à une pile d'images complexes n'est pas nécessaire pour établir un profil $F_{xi,yi}$. Un profil $F_{x_i,y_i}$ peut être obtenu en estimant l'amplitude complexe $A(x_i, y_i, z)$ de l'onde lumineuse d'exposition en différentes coordonnées z, pour des mêmes coordonnées radiales $(x_i, y_i)$, et cela à partir d'une image acquise $I_0$ ou de plusieurs images acquises dans des bandes spectrales différentes.

Un aspect important de l'invention est l'utilisation de profils modélisés établis à partir de particules modélisées 10(*par*). Pour cela, on prend en compte un ensemble de paramètres *par* d'une particule. Puis on modélise, par une modélisation numérique, l'amplitude complexe d'une onde lumineuse d'exposition $14_{\text{mod}}$, se propageant entre la particule modélisée et le capteur d'image 16, et résultant d'une illumination de la particule modélisée 10(*par*) par la source de lumière 11.

La modélisation peut notamment se basée sur la théorie de Mie. La théorie de Mie est un modèle de diffusion élastique permettant d'obtenir une solution aux équations de Maxwell décrivant une onde lumineuse diffractée par une particule sphérique illuminée par une onde lumineuse incidente monochromatique de longueur d'onde $\lambda$. Outre sa forme sphérique, la particule est caractérisée par un indice de réfraction $n$, ce dernier pouvant notamment être un indice de réfraction complexe $n = Re(n) + jIm(n)$, avec $j^2 = -1$. $Re$ et $Im$ sont respectivement les opérateurs partie réelle et partie imaginaire.

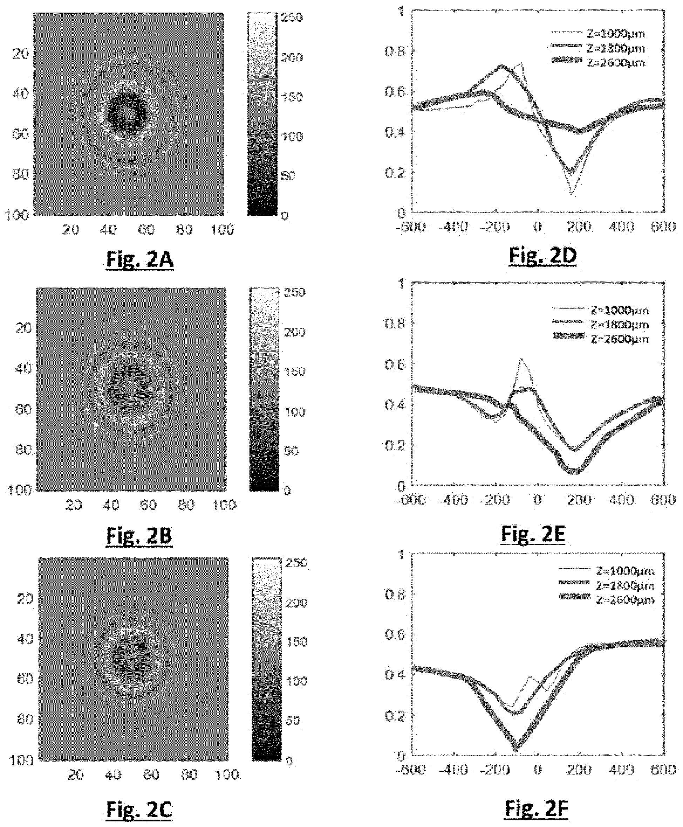

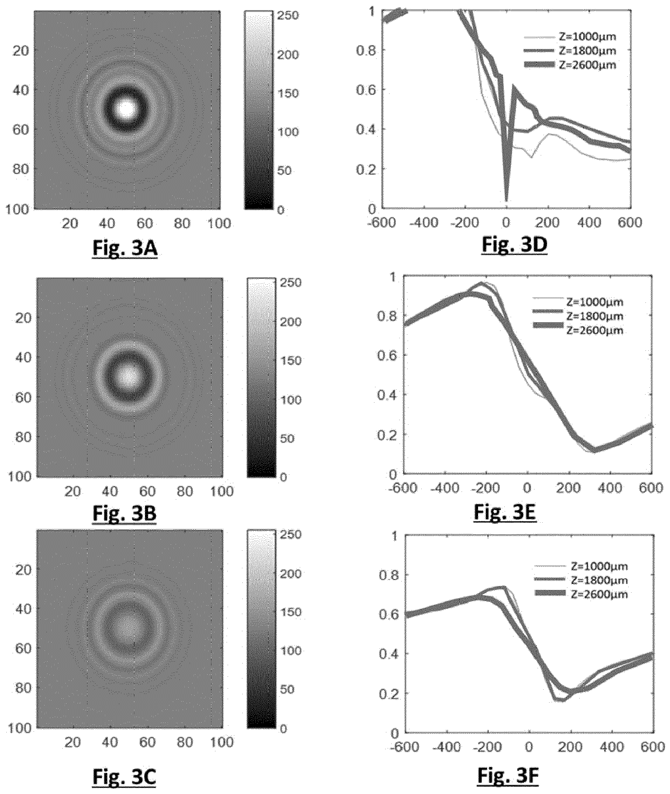

Une particule modélisée peut également être caractérisée par sa dimension, par exemple son diamètre ou son rayon. L'application du modèle de diffusion de Mie permet de simuler une figure de diffraction $I_{mod}(par)$ à différentes distances de l'échantillon. Cela permet notamment de former une figure de diffraction $I_{0,mod}(par)$ dans le plan de détection $P_0$, comme représenté sur les figures 2A à 2C et 3A à 3C. La notation $I_{0,mod}(par)$ désigne le fait que la figure de diffraction est modélisée dans le plan de détection $P_0$, en fonction d'un ensemble de paramètres *par.* L'ensemble de paramètres *par* peut former un vecteur de paramètres, au sens ou l'ensemble de paramètres peut être représenté sous une forme vectorielle.

Les figures 2A, 2B et 2C sont des simulations d'une figure de diffraction $I_{0,mod}(par)$, dans le plan de détection, résultant de la diffraction d'une onde lumineuse de longueur d'onde 450 nm, par une particule modélisée 10*(par)* dont le diamètre est respectivement égal à 20 $\mu$m, 15 $\mu$m et 10 $\mu$m se propageant dans un milieu d'indice égal à 1.33. L'indice de réfraction $n$ de la particule est de 1.37, soit un saut d'indice $\Delta n$, égal à 0.04 par rapport à l'indice du milieu. Sur ces figures, la partie imaginaire $Im(n)$ de l'indice de réfraction est considérée comme nulle.

Afin de prendre en compte les imperfections du capteur d'image 16, les figures de diffraction modélisées ont été échantillonnées spatialement en considérant un pas de pixels, ce dernier étant dans cet exemple égal à 1.67 $\mu$m. Les figures ont ensuite été floutées par application d'un filtrage gaussien pour tenir compte du bruit du capteur d'image. La distance entre le capteur d'image 16 et la particule modélisée 10*(par)* a été considérée égale à 1000 $\mu$m.

Chacune de ces figures a été obtenue en modélisant, dans le plan de détection $P_0$, l'amplitude complexe $A(x,y,z)$ de l'onde lumineuse d'exposition $14_{mod}$ se propageant vers le plan de détection, l'onde lumineuse d'exposition modélisée résultant de l'illumination de la particule modélisée. On a ensuite extrait le module de l'amplitude complexe $A(x,y,z)$, dans le plan de détection $P_0$, de façon à pouvoir simuler la figure de diffraction formée sur l'image acquise par le capteur d'image.

A partir de la figure de diffraction modélisée $I_{0,mod}(par)$, on peut former un profil, dit profil modélisé $F(par)$, représentant une évolution, parallèlement à l'axe de propagation Z, de l'amplitude complexe $A(x,y,z)$ de l'onde lumineuse d'exposition modélisée $14_{mod}$. Le profil modélisé $F(par)$ est de préférence établi, à partir de la figure de diffraction modélisée $I_{0,mod}$, de la même façon que le profil $F_{x,y}$ a été établi en partant de l'image acquise $I_0$. Lorsque le profil $F_{x,y}$ a été établi en formant une pile d'images complexes à partir de l'image acquise $I_0$, le profil modélisé $F(par)$ est établi en formant une pile d'images complexes $A_{z1,mod} ... A_{zn,mod}$ à partir de la figure de diffraction modélisée $I_{0,mod}$. Le profil modélisé $F(par)$ représente une modélisation de l'évolution de l'amplitude complexe $A_{mod}(x, y, z)$ de l'onde lumineuse d'exposition modélisée $14_{mod}$, et passant par une position radiale déterminée. La position radiale peut notamment correspondre au centre de la figure de diffraction, ce qui correspond également aux coordonnées du centre de la particule modélisée dans un plan parallèle au plan de détection.

Les figures 2D, 2E et 2F sont des profils $F(par)$ du module de l'expression complexe modélisée $A_{mod}(x,y,z)$, passant par une coordonnée radiale $(x,y)$ située au centre d'une particule 10*(par)* modélisée, dont le diamètre est respectivement égal à 20 $\mu$m, 15 $\mu$m et 10 $\mu$m. Sur chaque figure, on a considéré trois distances entre le capteur d'image et la particule modélisée, les distances s'élevant respectivement à 1000 $\mu$m, 1800 $\mu$m et 2600 $\mu$m. Sur les graphes, l'abscisse 0 correspond à la position de la particule. L'unité de l'axe des abscisses est le $\mu$m.

Les figures 3A, 3B et 3C sont des simulations d'une figure de diffraction résultant de la diffraction d'une onde lumineuse de longueur d'onde 450 nm, par une particule dont le diamètre est respectivement égal à 20 $\mu$m, 15 $\mu$m et 10 $\mu$m se propageant dans un milieu d'indice égal à 1.33.

L'indice de réfraction $n$ de chaque particule est de 1.37, soit un saut d'indice $\Delta n$ égal à 0.01 par rapport à l'indice du milieu. Les figures 3D, 3E et 3F sont des profils $F(par)$ du module de l'expression complexe modélisée, passant par une coordonnée radiale $(x,y)$ située au centre d'une particule modélisée 10*(par)*, dont le diamètre est respectivement égal à 20 $\mu$m, 15 $\mu$m et 10 $\mu$m. Sur chaque figure, on a considéré trois distances entre le capteur d'image et la particule, les distances s'élevant respectivement à 1000 $\mu$m, 1800 $\mu$m et 2600 $\mu$m.

La comparaison des figures 2D/3D, 2E/3E et 2F/3F montre que pour une même taille de particule, une faible variation d'indice de réfraction a une influence importante sur le profil.

Les figures 2A à 2F et 3A à 3F montrent qu'on peut modéliser l'amplitude complexe de l'onde lumineuse d'exposition 14 à laquelle est exposé le capteur d'image 16. Cela permet en particulier de modéliser numériquement des profils $F(par)$, par exemple des profils du module ou de la phase, correspondant à des particules dont les paramètres (taille, indice de réfraction $n$) sont connus. Plus généralement, la modélisation permet d'établir un profil $F(par)$, représentatif de l'amplitude complexe de l'onde lumineuse d'exposition, en considérant une particule dont le paramètre, ou les paramètres *par* sont connus. Par profil représentatif de l'amplitude complexe de l'onde lumineuse d'exposition, on entend un profil d'une grandeur établie à partir de l'amplitude complexe : la grandeur peut être établie à partir du module, ou de la phase, ou de la partie réelle, ou de la partie imaginaire.

Les paramètres de la particule forment un ensemble *par* pouvant comprendre :

- un indice de réfraction $n$ de la particule, cet indice pouvant être une grandeur complexe, ou une variation de l'indice de réfraction $n$ de la particule par rapport au milieu ambiant 10m;
- et/ou une dimension de la particule, de type rayon $r$ ou diamètre $d$ ;
- et/ou une distance z de la particule par rapport au plan de détection.

Chaque profil modélisé dépend également de la longueur d'onde $\lambda$.

Il s'agit d'une différence notable par rapport à l'art antérieur, dans lequel les profils étalons sont obtenus expérimentalement, en utilisant des échantillons connus. L'invention permet d'éviter le recours à des échantillons connus pour former des profils étalons. De plus, le fait de disposer de profils modélisés permet d'obtenir des valeurs quantitatives précises des paramètres d'une particule. L'invention permet notamment d'obtenir une valeur quantitative de l'indice de réfraction d'une particule.

Dans les paragraphes qui précèdent, en lien avec les figures 2A à 2F et 3A à 3F, on a décrit l'obtention de profils modélisés $F(par)$ selon deux étapes :

- la modélisation d'une figure de diffraction $I_{0,mod}$ dans le plan de détection ;
- à partir de la figure de diffraction modélisée, l'application d'un algorithme de reconstruction numérique pour établir un profil $F(par)$, parallèlement à l'axe de propagation Z, d'une amplitude complexe $A_{mod}(x,y,z)$ d'une onde lumineuse d'exposition modélisée $14_{mod}$.

De façon alternative, les profils modélisés peuvent être obtenus sans nécessairement modéliser une figure de diffraction $I_{0,mod}$ dans le plan de détection. On modélise alors l'amplitude complexe de l'onde lumineuse d'exposition $14_{mod}$ le long de l'axe de propagation Z. Cependant, les inventeurs estiment qu'il est préférable de procéder à une modélisation de la figure de diffraction $I_{0,mod}(par)$, puis à la formation du profil $F(par)$ correspondant à la particule modélisée de la même façon qu'on forme un profil $F_{x_i,y_i}$ passant par une coordonnée $(x_i, y_i)$, à partir de l'image $I_0$ acquise par le capteur d'image.

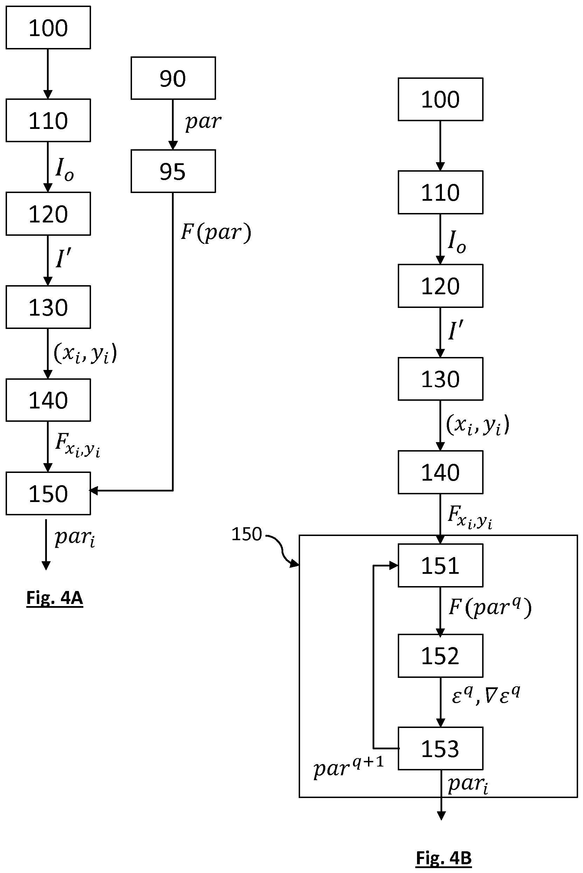

Quelle que soit la façon de les obtenir, les profils $F(par)$ ainsi modélisés peuvent être mémorisés dans une base de données, de façon à être mis à profit dans un procédé dont les principales étapes sont décrites ci-après, en lien avec les figures 4A à 4D. A chaque profil est associé un ensemble de paramètres (*par*).

Etape 100 : Illumination de l'échantillon 10 à l'aide de la source lumineuse 11.

Etape 110 : Acquisition d'une image $I_0$ de l'échantillon 10 par le capteur d'image 16, cette image formant un hologramme. Un des intérêts de la configuration sans lentille, représentée sur la figure 1, est le large champ observé, permettant d'adresser simultanément un volume d'échantillon élevé. Cela permet d'observer simultanément plusieurs particules, et ainsi d'obtenir une caractérisation rapide de l'échantillon. Le champ observé dépend de la taille du capteur d'image, en étant légèrement inférieur à la surface de détection de ce dernier, du fait de l'espacement entre les pixels du capteur et l'échantillon. Le champ observé est généralement supérieur à 10 mm$^2$, et est typiquement compris entre 10 mm$^2$ et 50 mm$^2$, ce qui est significativement plus élevé qu'avec un microscope.

Etape 120 : Détection de particules dans l'échantillon. L'image acquise $I_0$ comporte généralement un grand nombre de figures d'interférence. Du fait du recouvrement entre les différentes figures d'interférence, l'image acquise n'est généralement pas aisément exploitable pour localiser les particules présentes dans le champ observé. Ces dernières sont plus facilement identifiables à partir d'une image complexe reconstruite par application d'un opérateur de propagation holographique $h$ à l'image acquise $I_0$.

Aussi, l'étape 120 comporte une reconstruction d'au moins une image, dite image d'observation $I'$, de l'échantillon. On applique un opérateur de reconstruction holographique à l'image acquise, selon une distance de reconstruction, de façon à obtenir une image complexe représentant l'amplitude complexe de l'onde lumineuse d'exposition 14 dans un plan de reconstruction parallèle au plan de détection et situé à la distance de reconstruction de ce dernier. L'image d'observation $I'$ peut être l'image du module ou de la phase de l'image complexe ainsi reconstruite. Le plan de reconstruction dans lequel l'image d'observation est définie est de préférence un plan $P_{10}$ selon lequel s'étend l'échantillon 10. Sa position peut être déterminée a priori, ou par un algorithme de focalisation numérique, ce type d'algorithme étant connu de l'homme du métier.

Sur l'image d'observation $I'$, les particules $10_i$ apparaissent suffisamment contrastées pour être aisément discernables du milieu ambiant 10m.

Etape 130 : détermination d'une position radiale $(x_i, y_i)$ de chaque particule $10_i$. Il s'agit d'obtenir une position radiale représentative de chaque particule discernable sur l'image d'observation ou sur l'image acquise $I_0$, lorsque cette

dernière est exploitable. Un algorithme de segmentation peut être appliqué à l'image d'observation, de façon à extraire des régions d'intérêt $ROI_i$ correspondant respectivement à chaque particule $10_i$.

Etape 140 : formation d'un profil $F_{x_i,y_i}$ pour chaque particule $10_i$ à laquelle correspond une position radiale $(x_i,y_i)$. Il s'agit d'établir un profil $F_{x_i,y_i}$ représentatif de l'évolution de l'amplitude complexe de l'onde lumineuse d'exposition parallèlement à l'axe de propagation Z, le profil $F_{x_i,y_i}$ passant par la position radiale $(x_i,y_i)$ associée à chaque particule $10_i$. Le profil $F_{x_i,y_i}$ peut être un profil du module de l'onde lumineuse d'exposition : $F_{x_i,y_i} = M_{x_i,y_i}$. Le profil $F_{x_i,y_i}$ peut être un profil de phase de l'onde lumineuse d'exposition : $F_{x_i,y_i} = \varphi_{x_i,y_i}$. Il peut également s'agir d'un profil représentant une évolution de la partie réelle ou de la partie imaginaire de la particule.

Etape 150 : confrontation du profil $F_{x_i,y_i}$ formé pour chaque particule avec des profils modélisés $F(par)$, chaque profil modélisé étant paramétré par un ensemble de paramètres *par* comme précédemment évoqué. L'ensemble de paramètres *par* comporte par exemple un indice de réfraction *n*, ou un saut d'indice de réfraction $\Delta n$ du à la particule. L'étape 150 comporte une détermination du profil modélisé $F^*(par)$ le plus proche du profil $F_{x_i,y_i}$ formé pour la particule. Les paramètres $par_i$ de la particule $10_i$ sont les paramètres associés au profil modélisé le plus proche $F^*(par)$.

Sur le procédé représenté sur la figure 4A, on compare le profil $F_{x_i,y_i}$ à chaque profil modélisé $F(par)$, de façon à déterminer les paramètres du profil minimisant la comparaison. La comparaison peut par exemple comporter un écart quadratique, auquel cas :

$$par_i = arg\min_{par}\left[F_{x_i,y_i} - F(par)\right]^2 \quad (1)$$

Lorsque le profil $F_{x_i,y_i}$ est un profil représentant une évolution du module de l'amplitude complexe de l'onde lumineuse d'exposition,

$$par_i = arg\min_{par}\left[M_{x_i,y_i} - M(par)\right]^2 \quad (2)$$

, où $M(par)$ correspond à des profils modélisés du module d'une amplitude complexe d'une onde lumineuse d'exposition modélisée $14_{mod}$ en prenant en compte différentes valeurs du vecteur de paramètres *par*.

Lorsque le profil $F_i$ est un profil représentant une évolution de la phase de l'amplitude complexe de l'onde lumineuse d'exposition,

$$par_i = arg\min_{par}\left[\varphi_{x_i,y_i} - \varphi(par)\right]^2 \quad (3)$$

où $\varphi(par)$ correspond à des profils modélisés de la phase d'une amplitude complexe d'une onde lumineuse d'exposition modélisée $14_{mod}$ en prenant en compte différentes valeurs du vecteur de paramètres *par*.

Selon un mode de réalisation, la détermination des paramètres d'une particule peut combiner différents profils, par exemple sous la forme d'une minimisation d'une somme pondérée, de type :

$$par_i = arg\min_{par}\left(k_1\left[M_{x_i,y_i} - M(par)\right]^2 + k_2\left[\varphi_{x_i,y_i} - \varphi(par)\right]^2\right) \quad (4)$$

où $k_1$ et $k_2$ sont des scalaires, formant des termes de pondération.

Le vecteur de paramètres *par* d'une particule comprend au moins l'indice de réfraction. Lorsque l'indice de réfraction est exprimé sous la forme d'une grandeur complexe, les paramètres comprennent la partie réelle de l'indice de réfraction $Re(n)$ et sa partie imaginaire $Im(n)$. Comme précédemment indiqué, les paramètres peuvent comprendre une dimension (diamètre ou rayon) ou une distance z de la particule par rapport au plan de détection, selon l'axe de propagation Z.

L'étape 150 requiert le recours à des profils modélisés $F(par)$, pour différentes valeurs du vecteur de paramètres *par*. Comme décrit en lien avec les figures 2D à 2F, ou 3D à 3F, de tels profils peuvent être obtenus par modélisation numérique, en particulier selon le modèle de diffusion de Mie.

Lorsque l'algorithme se base sur une base de données de profils, la formation de cette dernière. fait l'objet des étapes 90 et 95. Au cours d'une étape 90, on prend en compte les paramètres que l'on souhaite déterminer, ces paramètres formant un ensemble de paramètres, pouvant prendre la forme d'un vecteur de paramètres. Au cours d'une étape 95, on effectue différentes modélisations pour différentes valeurs du vecteur de paramètres *par* de façon à obtenir, pour chaque valeur du vecteur de paramètres *par*, un profil modélisé *F(par)*. L'étape 95 peut également comporter une interpolation entre des profils modélisés *F(par)*, *F(par')*, où *par'* est un vecteur de paramètres dont les valeurs sont proches du vecteur *par*. L'interpolation permet d'obtenir des profils correspondant à des paramètres compris entre *par* et *par'*.

Selon un autre mode de réalisation, illustré sur la figure 4B, on peut appliquer, lors de l'étape 150, un algorithme itératif permettant d'estimer un profil *F(par)* le plus proche du profil mesuré $F_{x_i,y_i}$. Selon ce mode de réalisation, on ajuste progressivement le vecteur de paramètres *par* de la particule modélisée de telle sorte que le profil *F(par)* correspondant au vecteur de paramètres *par* tende vers le profil mesuré $F_{x_i,y_i}$. Au cours de chaque itération q, on détermine un écart $\varepsilon^q$ entre le profil mesuré $F_{x_i,y_i}$ et un profil $F(par^q)$. La notation $par^q$ correspond au vecteur de paramètres pris en compte lors de l'itération q. L'écart $\varepsilon^q$ peut être un écart quadratique moyen ou un écart moyen entre le profil mesuré $F_{x_i,y_i}$ et le profil $F(par^q)$. Il s'agit de préférence d'un scalaire. Le vecteur de paramètres $par^{q+1}$ de l'itération suivante $q+1$ est déterminé de façon à minimiser l'écart $\varepsilon^{q+1}$ entre le profil mesuré $F_{x_i,y_i}$ et le profil $F(par^{q+1})$ établi à l'aide du vecteur de paramètres $par^{q+1}$. Ainsi, chaque itération $q$ vise à estimer un vecteur de paramètres q+1 permettant de minimiser l'écart. Le procédé se réitère jusqu'à un arrêt des itérations, cet arrêt correspondant à l'atteinte d'un critère de convergence ou d'un nombre d'itérations prédéterminé.

Le vecteur de paramètres parq+1 considéré lors de l'itération suivante peut être estimé par un algorithme de type descente de gradient, au cours duquel à chaque itération q, on détermine un gradient de l'écart $\nabla\varepsilon^q$, ce dernier correspondant à une variation de l'écart $\varepsilon^q$ en fonction d'un ou plusieurs paramètres, et de préférence chaque paramètre, du vecteur de paramètres $par^q$. Le vecteur de paramètres $par^{q+1}$ pris en compte lors de l'itération suivante est déterminé en fonction de $\nabla\varepsilon^q$, de façon à minimiser l'écart $\varepsilon^{q+1}$.

Sur la figure 4B, on a représenté les sous-étapes 151, 152, et 153, correspondant respectivement à la formation du profil modélisé $F(par^q)$, le calcul de l'écart $\varepsilon^q$ et de son gradient $\nabla\varepsilon^q$, de façon à définir les paramètres *parq+1* à prendre en compte lors de l'itération suivante.

Lors de la première itération ($q=1$), l'algorithme itératif est initialisé par un vecteur de paramètres initial $par^{q=1}$. Le vecteur de paramètres initial peut être déterminé a priori.

Selon un mode de réalisation, les deux modes de réalisation précédemment décrits sont combinés : on utilise une base de données de profils et on détermine le vecteur de paramètres $par_i$ minimisant la comparaison entre les profils de la base de données *F(par)* et le profil mesuré $F_{x_i,y_i}$. Puis on ajuste progressivement le vecteur de paramètres correspondant à la particule observée en mettant en œuvre un algorithme d'ajustement itératif, par exemple de type descente de gradient. L'algorithme d'ajustement itératif est alors initialisé par le vecteur de paramètres $par_i$. Autrement dit, selon ce mode de réalisation, on met en œuvre les étapes 100 à 150 représentées sur la figure 4A. Le vecteur de paramètres $par_i$, résultant de l'étape 150 de la figure 4A, forme le vecteur initial $par^{q=1}$ permettant une mise en œuvre de l'étape 150 de la figure 4B.

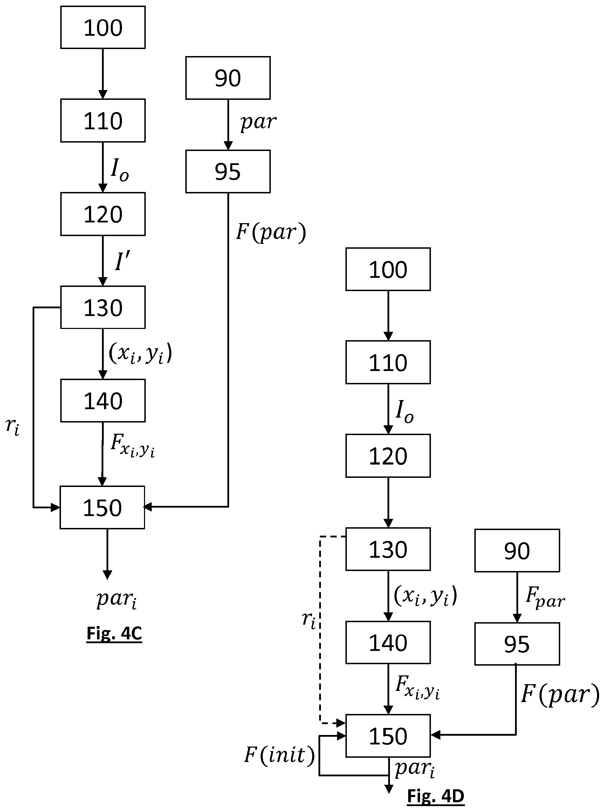

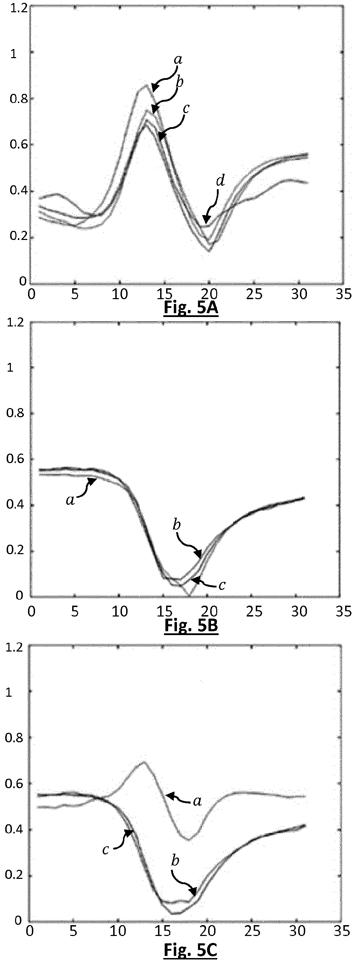

Selon une variante, dont les étapes sont représentées sur la figure 4C, l'étape 150 met en œuvre un algorithme de minimisation, tel que décrit en lien avec la figure 4A. L'étape 150 est initialisée sur la base d'un a priori basé sur une estimation d'un des paramètres recherchés. Dans l'exemple représenté sur la figure 4C, on prend en compte une dimension $r_i$ d'une particule $10_i$, la dimension ayant été estimée par l'image d'observation *I'* résultant de l'étape 120. Le fait d'initialiser l'algorithme de minimisation en utilisant un a priori, basé sur une estimation d'un paramètre, permet de réduire le temps de calcul et d'améliorer la précision de la détermination du vecteur des paramètres. Les figures 5A à 5C illustrent cet aspect.

La figure 5A montre une application de l'invention sur une cellule flottante $10_i$ de type CHO, baignant dans un milieu de culture. La cellule $10_i$ est illuminée par une source de lumière 11 de longueur d'onde 450 nm. La source de lumière est une diode électroluminescente émettant dans la bande spectrale 450nm - 465 nm. Elle est disposée à une distance de 1400 µm d'un capteur d'image monochrome (référence IDS 3840x2748 pixels). Les paramètres recherchés sont *par* = $[r_i,\Delta n_i]$. On a acquis une image $I_0$ de la cellule, à partir de laquelle une image d'observation *I'* a été obtenue, par reconstruction holographique. Le rayon de la cellule $r_i$ a été estimé par l'image d'observation, représentant le module de l'amplitude complexe dans le plan de reconstruction. L'image d'observation *I'* a également permis de définir les coordonnées $(x_i,y_i)$ du centre de la cellule $10_i$ dans le plan de détection. A partir de l'image acquise, on a déterminé un profil $F_{x_i,y_i}$ du module de l'onde lumineuse d'exposition 14, le long d'un axe parallèle à l'axe de propagation Z et passant par les coordonnées radiales de la cellule. Le profil $F_{x_i,y_i}$ est appelé profil mesuré.

La courbe *a* montre un profil *F(init)* utilisé pour l'initialisation de l'algorithme, le profil utilisant le rayon estimé sur une image d'observation de l'échantillon *I'*. Le rayon est estimé égal à 8.83 µm. Ce profil correspond aux paramètres $[r_i = 8.15$ µm; $Re(\Delta n_i) = 0.025]$. La courbe *b* correspond au profil mesuré $F_{x_i,y_i}$. Les courbes *c* et *d* correspondent au profil modélisé le plus proche *F\*(par)*, respectivement sans considérer et en considérant la partie imaginaire *Im(n)* de l'indice de réfraction *n*. Les paramètres $par_i$ associés aux courbes *c* et *d* sont respectivement : $[r_i = 8.15$ µm, $Re(\Delta n_i) = 0.027]$ et $[r_i = 8.15$ µm, $Re(\Delta n_i) = 0.025, Im(\Delta n_i) = 0.01]$. Ces paramètres sont considérés comme correspondant à ceux de la cellule examinée.

La figure 5B montre un autre exemple d'application sur une autre cellule du même type. Dans cet exemple, on a estimé, à partir d'une image d'observation $I'$, le rayon $r_i$ de la cellule à 6.74 $\mu$m. L'algorithme de minimisation a été initialisé en considérant le profil modélisé représenté sur la courbe a, les paramètres associés à ce profil étant [$r_i$ = 6.74 $\mu$m, $Re(\Delta n_i)$ = 0.01, $Im(\Delta n_i)$ = 0.00]. La courbe $b$ correspond au profil mesuré $F_{x_i, y_i}$. La courbe c correspond au profil modélisé le plus proche $F^*(par)$, les paramètres associés à ce profil étant [$r_i$ = 6.09 $\mu$m, $Re(\Delta n_i)$ = 0.014, $Im(\Delta n_i)$ = 0.007]. Ces paramètres sont considérés comme correspondant à ceux de la cellule examinée.

La figure 5C complète la figure 5B. Sur la figure 5C, on a représenté le profil mesurée $F_{x_i, y_i}$ (courbe $b$), ce dernier étant également représenté sur la figure 5B. Sur la figure 5C, le profil a correspond au profil modélisé avec lequel l'algorithme de minimisation est initialisé, ce dernier correspondant aux paramètres [$r_i$ = 6.68 $\mu$m, $Re(\Delta n_i)$ = 0.025, $Im(\Delta n_i)$ = 0.0]. La courbe c correspond au profil modélisé le plus proche, les paramètres associés à ce profil étant [$r_i$ = 6.25 $\mu$m, $Re(\Delta n_i)$ = 0.012, $Im(\Delta n_i)$ = 0.008]. Ces paramètres sont considérés comme correspondant à ceux de la cellule examinée. Bien que l'algorithme de minimisation soit initialisé en considérant des valeurs d'indice différentes, il permet d'obtenir des profils les plus proches $F^*(par)$ (profils c des figures 5B et 5C) dont les paramètres respectifs sont cohérents : [$r_i$ = 6.09 $\mu$m, $Re(\Delta n_i)$ = 0.014, $Im(\Delta n_i)$ = 0.007] pour la figure 5B et [$r_i$ = 6.25 $\mu$m, $Re(\Delta n_i)$ = 0.012, $Im(\Delta n_i)$ = 0.008] sur la figure 5C.

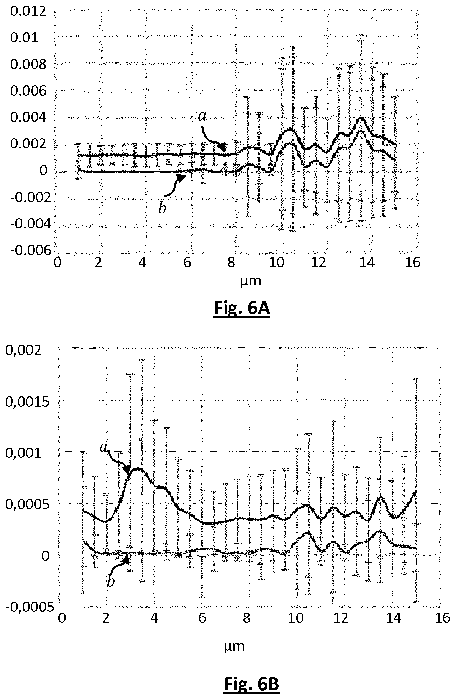

Selon un mode de réalisation, dont les étapes sont illustrées sur la figure 4D, l'étape 150 de l'algorithme est réitérée. De préférence, l'étape 150 prend en compte une estimation de la taille de la particule résultant d'une image d'observation. Au cours d'une première itération, l'étape 150 résulte en une première estimation de l'indice de réfraction. Cette première estimation est utilisée pour définir le profil d'initialisation $F(init)$ de la deuxième itération. Le nombre d'itérations peut être supérieur à 2, mais les inventeurs ont constaté que des résultats satisfaisants étaient obtenus au bout de deux itérations. Les figures 6A et 6B représentent l'erreur de quantification affectant respectivement la partie réelle et la partie imaginaire d'un indice de réfraction sans réitération de l'étape 150 (courbes a) et avec réitération de l'étape 150 (courbes b). Les erreurs sont représentées en fonction du rayon des cellules. Ces courbes ont été obtenues sur la base de modélisations.

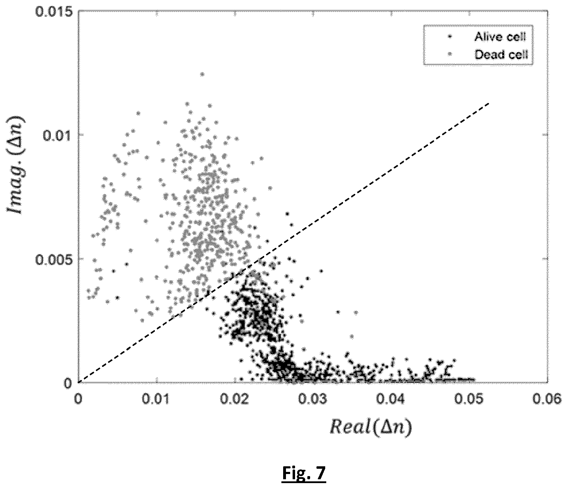

La figure 7 montre un exemple permettant de classifier des cellules en fonction de la partie imaginaire et de la partie réelle de l'indice de réfraction. Sur cette figure, on a représenté la partie réelle et la partie imaginaire de l'indice de réfraction de différentes cellules, les valeurs représentées étant obtenues en mettant en œuvre l'invention. On constate que la comparaison entre la partie réelle et la partie imaginaire est un indicateur pertinent relatif à l'état de la cellule, parmi un état vivant ou un état mort. On a tracé une ligne séparant deux populations de cellules en fonction de leurs états respectifs.

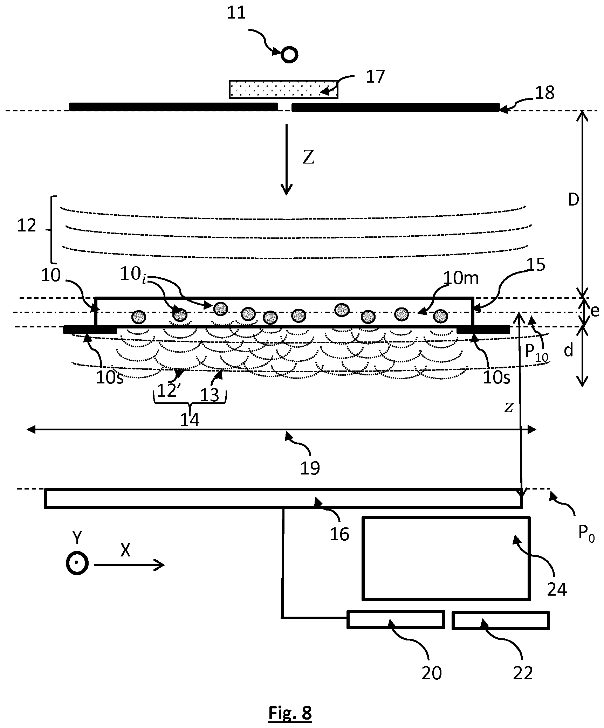

La figure 8 schématise un dispositif permettant une mise en œuvre de l'invention. Contrairement au dispositif représenté sur la figure 1, le dispositif de la figure 8 comporte un système optique 19 de formation d'image. Le système optique 19 définit un plan image et un plan objet. Le système optique peut être une lentille ou un objectif. Lors de l'acquisition de l'image de l'échantillon, le capteur d'image est disposé selon une configuration défocalisée. Le plan de détection est décalé par rapport au plan image et/ou le plan selon lequel s'étend l'échantillon est décalé par rapport au plan objet. Le décalage est généralement faible, en étant de préférence inférieur à 1 mm, et typiquement dans une plage 50 $\mu$m - 500 $\mu$m.

L'invention pourra être mise en oeuvre pour la caractérisation de particules dans le domaine de la biologie ou de la santé. D'autres applications peuvent être envisagées, par exemple dans le contrôle de l'environnement, ou de procédés industriels, ou dans le domaine de l'agroalimentaire.

## Revendications

1. Procédé de détermination d'au moins un paramètre d'une particule (10i) présente dans un échantillon (10), l'échantillon s'étendant entre un capteur d'image (16) et une source de lumière (11), le capteur d'image s'étendant selon un plan de détection ($P_0$), le procédé comportant les étapes suivantes :

    a) illumination de l'échantillon par la source de lumière, la source de lumière émettant une onde lumineuse incidente (12) se propageant selon un axe de propagation (Z) ;
    b) acquisition d'une image de l'échantillon ($I_0$) par le capteur d'image (16), le capteur d'image étant exposé à une onde lumineuse d'exposition (14), l'image acquise formant un hologramme de l'échantillon;
    c) détermination d'une position $(x_i, y_i)$ de la particule dans le plan de détection ou dans un plan parallèle au plan de détection ;
    d) à partir de l'image acquise ($I_0$), application d'un opérateur de propagation holographique (h), selon une pluralité de distances (z) du plan de détection, de façon à estimer, à chaque distance, une amplitude complexe ($A(x_i, y_i, z)$) de l'onde lumineuse d'exposition (14);
    e) à partir de l'amplitude complexe estimée, en différentes distances (z), obtention d'un profil ($F_{x_i, y_i}$) représentant

une évolution de l'amplitude complexe de l'onde lumineuse d'exposition ($A(x_i, y_i, z)$) selon un axe parallèle à l'axe de propagation (Z) et passant par la position $(x_i, y_i)$ de la particule ;

le procédé étant **caractérisé en ce que** la particule est associée à un ensemble de paramètres (par), comportant au moins une taille de la particule et un indice de réfraction ($n, \Delta n$) de la particule, le procédé comportant également :

f) une modélisation d'une particule modélisée (10(par)), prenant en compte une valeur de chaque paramètre de l'ensemble de paramètres (*par*), et une modélisation d'une onde lumineuse d'exposition (14$_{mod}$), qui se propagerait vers le capteur d'image, sous l'effet d'une illumination, par la source de lumière (11), de la particule modélisée ;

g) à partir de l'onde lumineuse d'exposition modélisée (14$_{mod}$), formation d'un profil ($F(par)$) représentant une évolution de l'amplitude complexe de l'onde lumineuse d'exposition modélisée, selon un axe parallèle à l'axe de propagation (Z) ;

h) comparaison entre le profil ($F_{x_i,y_i}$) obtenu lors de l'étape e) et le profil ($F(par)$) modélisé résultant de l'étape g), de façon à déterminer la valeur d'au moins un paramètre ($par_i$) de la particule.

2. Procédé selon la revendication 1, dans lequel l'indice de réfraction ($n$) comporte une partie réelle *(Re(n))* et une partie imaginaire *(Im(n))*.

3. Procédé selon l'une quelconque des revendications précédentes, dans lequel l'ensemble de paramètres (*par*) comporte également une distance ($z$) de la particule par rapport au plan de détection ($P_0$).

4. Procédé selon l'une quelconque des revendications précédentes, dans lequel :

- l'étape f) comporte des modélisations de particules présentant respectivement différentes valeurs d'au moins un paramètre, de façon à obtenir, suite à l'étape g), une base de données de profils modélisés, à chaque profil modélisé étant associé un ensemble de paramètres ;
- l'étape h) comporte une minimisation d'un écart entre le profil ($F_{x_i,y_i}$) résultant de l'étape e) et les profils ($F(par)$) de la base de données, les valeurs respectives des paramètres de la particule étant celles minimisant l'écart.

5. Procédé selon l'une quelconque des revendications précédentes, dans lequel les étapes f) à h) sont effectuée de façon itérative, la valeur d'un paramètre de la particule ($n, \Delta n$) résultant d'une itération étant utilisée pour initialiser une itération suivante.

6. Procédé selon l'une quelconque des revendications précédentes, dans lequel :

- l'étape f) comporte des modélisations de particules de différentes tailles et/ou de différents indices de réfraction, de façon à obtenir, suite à l'étape g), une base de données de profils modélisés, à chaque profil modélisé étant associé une taille et/ou un indice de réfraction;
- l'étape h) comporte une détermination de la taille de la particule et/ou de l'indice de réfraction de la particule.

7. Procédé selon l'une quelconque des revendications précédentes, dans lequel :

- l'étape f) comporte des modélisations de particules situées à différentes distances du plan de détection, de façon à obtenir, suite à l'étape g) une base de données de profils modélisés, chaque profil modélisé étant associé à une distance par rapport au plan de détection ;
- l'étape h) comporte une détermination de la distance entre la particule et le plan de détection.

8. Procédé selon l'une quelconque des revendications précédentes, dans lequel les étapes f) à h) sont mises en œuvre de façon itérative, de telle sorte qu'au cours de chaque itération, le profil modélisé lors de l'étape g) se rapproche progressivement du profil déterminé lors de l'étape e).

9. Procédé selon la revendication 8, dans lequel l'étape h) d'une itération ($q$) comporte :

- une détermination d'un écart ($\varepsilon^q$) entre le profil modélisé $F(par^q)$ lors de l'étape g) de la même itération et le profil ($F_{x_i,y_i}$) résultant de l'étape e) ;
- une détermination d'un gradient de l'écart ($\varepsilon^q$) en fonction d'au moins un paramètre de l'ensemble de paramètres, de façon à déterminer les valeurs des paramètres de la particule modélisée lors de l'étape f) de l'itération suivante ($q$ + 1).

10. Procédé selon l'une quelconque des revendications précédentes, comportant également :

- une application d'un opérateur de propagation ($h$) à l'image acquise, en considérant plusieurs distances ($z$) par rapport au plan de détection, de façon à obtenir une pile d'images reconstruites, à chaque image reconstruite étant associée une distance par rapport au plan de détection ;
- à partir d'une image reconstruite ($I'$), estimation d'une taille ($r_i, d_i$) de la particule ;

de telle sorte que lors de l'étape h) comporte une prise en compte de la taille de la particule estimée à partir de l'image reconstruite.

11. Procédé selon l'une quelconque des revendications précédentes, dans lequel la particule est une cellule, le procédé comportant une détermination d'un état de vie ou de mort de la cellule en fonction de l'indice de réfraction.

12. Procédé selon la revendication 11, dans lequel l'indice de réfraction comporte une partie réelle et une partie imaginaire, l'état de vie ou de mort de la cellule étant défini en fonction d'une comparaison entre la partie réelle ($Re(n)$) et la partie imaginaire ($Im(n)$).

13. Procédé selon l'une quelconque des revendications précédentes, dans lequel il n'y a pas d'optique de formation d'image entre l'échantillon et le capteur d'image.

14. Procédé selon l'une quelconque des revendications 1 à 12, dans lequel un système optique (19) s'étend entre l'échantillon et le capteur d'image, le système optique définissant un plan image et un plan objet, et dans lequel lors de l'étape b), l'image est acquise selon une configuration défocalisée, le plan de détection étant décalé par rapport au plan image, et/ou un plan de l'échantillon, selon lequel s'étend l'échantillon, étant décalé par rapport au plan objet.

15. Dispositif d'observation d'un échantillon (10), l'échantillon comportant des particules, le dispositif comportant :

- une source de lumière (11), configurée pour illuminer l'échantillon ;
- un support d'échantillon (10s), configuré pour recevoir l'échantillon ;
- un capteur d'image (16), disposé de telle sorte que lorsque l'échantillon est disposé sur le support, il s'étend entre le capteur d'image et la source de lumière, le capteur d'image étant configuré pour acquérir une image de l'échantillon ;
- un processeur (20), configuré pour mettre en œuvre les étapes d) à h) de l'une quelconque des revendications précédentes, à partir d'une estimation d'une position d'au moins une particule dans le plan de détection ou dans un plan parallèle au plan de détection, et à partir d'une image acquise par le capteur d'image.

16. Dispositif selon la revendication 15, dans lequel aucune optique de formation d'image n'est disposée entre le capteur d'image et le processeur.

17. Dispositif selon la revendication 15, comportant un système optique (19) s'étendant entre l'échantillon et le capteur d'image, le système optique définissant un plan image et un plan objet, le dispositif comportant un moyen d'ajustement du système optique, ou de l'échantillon, ou du capteur d'image, de telle sorte que :

- le plan de détection soit décalé du plan image ;
- et/ou le plan objet soit décalé d'un plan d'échantillon, selon lequel s'étend l'échantillon.

**Patentansprüche**

1. Verfahren zur Bestimmung mindestens eines Parameters eines Teilchens ($10_i$), das in einer Probe (10) vorhanden ist, wobei sich die Probe zwischen einem Bildsensor (16) und einer Lichtquelle (11) erstreckt, wobei sich der Bildsensor in einer Detektionsebene ($P_0$), erstreckt, wobei das Verfahren die folgenden Schritte aufweist:

a) Beleuchten der Probe durch die Lichtquelle, wobei die Lichtquelle eine einfallende Lichtwelle (12) emittiert, die sich gemäß einer Ausbreitungsachse (Z) ausbreitet;
b) Erfassen eines Bilds der Probe ($I_0$) durch den Bildsensor (16), wobei der Bildsensor einer Expositionslichtwelle (14) exponiert ist, wobei das erfasste Bild ein Hologramm der Probe bildet;

c) Bestimmen einer Position ($x_i$, $y_i$) des Teilchens in der Detektionsebene oder in einer Ebene parallel zur Detektionsebene;

d) anhand des erfassten Bilds ($I_0$), Anwenden eines Operators zur holografischen Ausbreitung (h) gemäß einer Mehrzahl von Abständen (z) von der Detektionsebene, um bei jedem Abstand eine komplexe Amplitude ($A(x_i,y_i,z)$) der Expositionslichtwelle (14) zu schätzen;

e) anhand der geschätzten komplexen Amplitude, Erhalten eines Profils ($F_{x_i,y_i}$) in verschiedenen Abständen (z), das eine Entwicklung der komplexen Amplitude der Expositionslichtwelle ($A(x_i,y_i,z)$) gemäß einer Achse darstellt, die parallel zur Ausbreitungsachse (Z) und durch die Position ($x_i$, $y_i$) des Teilchens verläuft;

wobei das Verfahren **dadurch gekennzeichnet ist, dass** das Teilchen einem Parametersatz (par) zugeordnet wird, der mindestens eine Größe des Teilchens und einen Brechungsindex ($n$, $\Delta n$) des Teilchens aufweist, wobei das Verfahren ebenfalls Folgendes aufweist:

f) ein Modellieren eines modellierten Teilchens (10(par)) unter Berücksichtigung eines Werts jedes Parameters des Parametersatzes (par) und ein Modellieren einer Expositionslichtwelle ($14_{mod}$), die sich unter der Wirkung einer Beleuchtung des modellierten Teilchens durch die Lichtquelle (11) zum Bildsensor ausbreiten würde;

g) anhand der modellierten Expositionslichtwelle ($14_{mod}$), Bilden eines Profils *(F(par))*, das eine Entwicklung der komplexen Amplitude der modellierten Expositionslichtwelle gemäß einer Achse darstellt, die parallel zur Ausbreitungsachse (Z) verläuft;

h) Vergleichen des Profils ($F_{x_i,y_i}$), das beim Schritt e) bezogen wird, und des modellierten Profils *(F(par))*, das aus dem Schritt g) hervorgeht, um den Wert mindestens eines Parameters ($par_i$) des Teilchens zu bestimmen.

2. Verfahren nach Anspruch 1, wobei der Brechungsindex ($n$) einen Realteil *(Re(n))* und einen Imaginärteil *(Im(n))* aufweist.

3. Verfahren nach einem der vorhergehenden Ansprüche, wobei der Parametersatz (par) ebenfalls einen Abstand (z) des Teilchens bezogen auf die Detektionsebene ($P_0$) aufweist.

4. Verfahren nach einem der vorhergehenden Ansprüche, wobei:

- der Schritt f) Modellierungen von Teilchen aufweist, die jeweils verschiedene Werte mindestens eines Parameters aufweisen, um im Anschluss an den Schritt g) eine Datenbank modellierter Profile zu erhalten, wobei jedem modellierten Profil ein Parametersatz zugeordnet wird;

- der Schritt h) ein Minimieren einer Abweichung zwischen dem Profil ($F_{x_i,y_i}$), das aus dem Schritt e) hervorgeht, und den Profilen *(F(par))* der Datenbank aufweist, wobei die jeweiligen Werte der Parameter des Teilchens diejenigen sind, die die Abweichung minimieren.

5. Verfahren nach einem der vorhergehenden Ansprüche, wobei die Schritte f) bis h) iterativ durchgeführt werden, wobei der Wert eines Parameters des Teilchens ($n$, $\Delta n$), der aus einer Iteration hervorgeht, dafür genutzt wird, eine folgende Iteration einzuleiten.

6. Verfahren nach einem der vorhergehenden Ansprüche, wobei:

- der Schritt f) Modellierungen von Teilchen verschiedener Größen und/oder verschiedener Brechungsindexe aufweist, um nach dem Schritt g) eine Datenbank modellierter Profile zu erhalten, wobei jedem modellierten Profil eine Größe und/oder ein Brechungsindex zugeordnet wird;

- der Schritt h) ein Bestimmen der Größe des Teilchens und/oder des Brechungsindexes des Teilchens aufweist.

7. Verfahren nach einem der vorhergehenden Ansprüche, wobei:

- der Schritt f) Modellierungen von Teilchen aufweist, die sich in verschiedenen Abständen von der Detektionsebene befinden, um nach dem Schritt g) eine Datenbank modellierter Profile zu erhalten, wobei jedes modellierte Profil einem Abstand bezogen auf die Detektionsebene zugeordnet ist;

- der Schritt h) ein Bestimmen des Abstands zwischen dem Teilchen und der Detektionsebene aufweist.

8. Verfahren nach einem der vorhergehenden Ansprüche, wobei die Schritte f) bis h) iterativ durchgeführt werden, so dass sich im Verlauf jeder Iteration das Profil, das beim Schritt g) modelliert wird, allmählich dem Profil annähert, das beim Schritt e) bestimmt wird.

9. Verfahren nach Anspruch 8, wobei der Schritt h) einer Iteration iteration (q) Folgendes aufweist:

- ein Bestimmen einer Abweichung ($\varepsilon^q$) zwischen dem Profil, das beim Schritt des g) derselben Iteration modelliert wird ($F(par^q)$), und dem Profil ($F_{x_i, y_i}$), das aus dem Schritt e) hervorgeht;
- ein Bestimmen eines Gradienten der Abweichung ($\varepsilon^q$) in Abhängigkeit von mindestens einem Parameter des Parametersatzes, um die Werte der Parameter des Teilchens zu bestimmen, das beim Schritt f) der folgenden Iteration ($q + 1$) modelliert wird.

10. Verfahren nach einem der vorhergehenden Ansprüche, ebenfalls aufweisend:

- ein Anwenden eines Ausbreitungsoperators ($h$) auf das erfasste Bild unter Berücksichtigung mehrerer Abstände ($z$) bezogen auf die Detektionsebene, um einen Stapel rekonstruierter Bilder zu erhalten, wobei jedem rekonstruierten Bild ein Abstand bezogen auf die Detektionsebene zugeordnet wird;
- anhand eines rekonstruierten Bilds ($I'$), Schätzen einer Größe ($r_i, d_i$) des Teilchens;

so dass beim Schritt h) ein Berücksichtigen der geschätzten Größe des Teilchens anhand des rekonstruierten Bilds aufweist.

11. Verfahren nach einem der vorhergehenden Ansprüche, wobei das Teilchen eine Zelle ist, wobei das Verfahren ein Bestimmen eines Lebens- oder Todeszustands der Zelle in Abhängigkeit von einem Brechungsindex aufweist.

12. Verfahren nach Anspruch 11, wobei der Brechungsindex einen Realteil und einen Imaginärteil aufweist, wobei der Lebens- oder Todeszustand der Zelle in Abhängigkeit von einem Vergleich zwischen dem Realteil ($Re(n)$) und dem Imaginärteil ($Im(n)$) definiert wird.

13. Verfahren nach einem der vorhergehenden Ansprüche, wobei keine Bilderzeugungsoptik zwischen der Probe und dem Bildsensor vorhanden ist.

14. Verfahren nach einem der Ansprüche 1 bis 12, wobei sich ein optisches System (19) zwischen der Probe und dem Bildsensor erstreckt, wobei das optische System eine Bildebene und eine Objektebene definiert, und wobei beim Schritt b) das Bild gemäß einer defokussierten Konfiguration erfasst wird, wobei die Detektionsebene bezogen auf die Bildebene versetzt ist und/oder eine Probenebene, gemäß welcher sich die Probe erstreckt, bezogen auf die Objektebene versetzt ist.

15. Vorrichtung zur Betrachtung einer Probe (10), wobei die Probe Teilchen aufweist, die Vorrichtung aufweisend:

- eine Lichtquelle (11), die dazu ausgebildet ist, die Probe zu beleuchten;
- einen Probenträger (10s), der dazu ausgebildet ist, die Probe aufzunehmen;
- einen Bildsensor (16), der so angeordnet ist, dass er sich, wenn die Probe auf dem Träger angeordnet ist, zwischen dem Bildsensor und der Lichtquelle erstreckt, wobei der Bildsensor dazu ausgebildet ist, ein Bild der Probe zu erfassen;
- einen Prozessor (20), der dazu ausgebildet ist, die Schritte d) bis h) nach einem der vorhergehenden Ansprüche anhand einer Schätzung einer Position mindestens eines Teilchens in der Detektionsebene oder in einer Ebene parallel zur Detektionsebene und anhand eines Bilds, das vom Bildsensor erfasst ist, durchzuführen.

16. Vorrichtung nach Anspruch 15, wobei keine Bilderzeugungsoptik zwischen dem Bildsensor und dem Prozessor angeordnet ist.

17. Vorrichtung nach Anspruch 15, aufweisend ein optisches System (19), das sich zwischen der Probe und dem Bildsensor erstreckt, wobei das optische System eine Bildebene und eine Objektebene definiert, wobei die Vorrichtung ein Mittel zur Einstellung des optischen Systems oder der Probe oder des Bildsensors aufweist, so dass:

- die Detektionsebene von der Bildebene versetzt ist;
- und/oder die Objektebene von einer Probenebene versetzt ist, gemäß welcher sich die Probe erstreckt.

**Claims**

1. Method for determining at least one parameter of a particle ($10_i$) present in a sample (10), the sample lying between an image sensor (16) and a light source (11), the image sensor lying in a detection plane ($P_0$), the method comprising the following steps:

   a) illuminating the sample with the light source, the light source emitting an incident light wave (12) that propagates along a propagation axis (Z);
   b) acquiring an image of the sample ($I_0$) with the image sensor (16), the image sensor being exposed to an exposure light wave (14), the acquired image forming a hologram of the sample;
   c) determining a position ($x_i$, $y_i$) of the particle in the detection plane or in a plane parallel to the detection plane;
   d) on the basis of the acquired image ($I_0$), applying a holographic propagation operator (h), for a plurality of distances (z) from the detection plane, so as to estimate, at each distance, a complex amplitude ($A(x_i,y_i,z)$) of the exposure light wave (14);
   e) on the basis of the complex amplitude estimated, at various distances (z), obtaining a profile ($F_{x_i,y_i}$) representing a variation in the complex amplitude of the exposure light wave ($A(x_i,y_i,z)$) along an axis parallel to the propagation axis (Z) and passing through the position ($x_i$, $y_i$) of the particle;

   the method being **characterized in that** the particle is associated with a set of parameters (*par*), comprising at least a size of the particle and a refractive index ($n$, $\Delta n$) of the particle, the method also comprising:

   f) modelling a modelled particle (10(*par*)), taking into account a value of each parameter of the set of parameters (*par*), and modelling an exposure light wave ($14_{mod}$), which would propagate toward the image sensor, under the effect of an illumination, with the light source (11), of the modelled particle;
   g) on the basis of the modelled exposure light wave ($14_{mod}$), forming a profile *(F(par))* representing a variation in the complex amplitude of the modelled exposure light wave, along an axis parallel to the propagation axis (Z);
   h) comparing the profile ($F_{x_i,y_i}$) obtained in step e) with the modelled profile *(F(par))* resulting from step g), so as to determine the value of at least one parameter (*$par_i$*) of the particle.

2. Method according to Claim 1, wherein the refractive index ($n$) comprises a real part ($Re(n)$) and an imaginary part ($Im(n)$).

3. Method according to either one of the preceding claims, wherein the set of parameters (*par*) also comprises a distance (z) of the particle with respect to the detection plane ($P_0$).

4. Method according to any one of the preceding claims, wherein:

   - step f) comprises modelling particles respectively having various values of at least one parameter, so as to obtain, following step g), a database of modelled profiles, each modelled profile being associated with one set of parameters;
   - step h) comprises minimizing a deviation between the profile ($F_{x_i,y_i}$) resulting from step e) and the profiles *(F(par))* of the database, the respective values of the parameters of the particle being those minimizing the deviation.

5. Method according to any one of the preceding claims, wherein steps f) to h) are carried out iteratively, the value of a parameter ($n$, $\Delta n$) of the particle resulting from one iteration being used to initialize a following iteration.

6. Method according to any one of the preceding claims, wherein:

   - step f) comprises modelling particles of various sizes and/or of various refractive indices, so as to obtain, following step g), a database of modelled profiles, each modelled profile being associated with a size and/or a refractive index;
   - step h) comprises determining the size of the particle and/or the refractive index of the particle.

7. Method according to any one of the preceding claims, wherein:

   - step f) comprises modelling particles located at various distances from the detection plane, so as to obtain, following step g) a database of modelled profiles, each modelled profile being associated with a distance with respect to the detection plane;
- step h) comprises determining the distance between the particle and the detection plane.

8. Method according to any one of the preceding claims, wherein steps f) to h) are implemented iteratively, such that, in each iteration, the profile modelled in step g) gets gradually closer to the profile determined in step e).

9. Method according to Claim 8, wherein step h) of an iteration ($q$) comprises:

- determining a deviation ($\varepsilon^q$) between the profile ($F(par^q)$) modelled in step g) of the same iteration, and the profile ($F_{x_i,y_i}$) resulting from step e);
- determining a gradient of the deviation ($\varepsilon^q$) as a function of at least one parameter of the set of parameters, so as to determine the values of the parameters of the particle modelled in step f) of the following iteration ($q + 1$).

10. Method according to any one of the preceding claims, also comprising:

- applying a propagation operator ($h$) to the acquired image, while considering a plurality of distances ($z$) with respect to the detection plane, so as to obtain a stack of reconstructed images, each reconstructed image being associated with a distance with respect to the detection plane;
- on the basis of a reconstructed image ($I'$), estimating a size ($r_i$, $d_i$) of the particle;

such that step h) comprises taking into account the size of the particle estimated on the basis of the reconstructed image.

11. Method according to any one of the preceding claims, wherein the particle is a cell, the method comprising determining an alive or dead state of the cell depending on the refractive index.

12. Method according to Claim 11, wherein the refractive index comprises a real part and an imaginary part, the alive or dead state of the cell being defined depending on a comparison between the real part ($Re(n)$) and the imaginary part ($Im(n)$).

13. Method according to any one of the preceding claims, wherein there is no image-forming optic between the sample and the image sensor.

14. Method according to any one of Claims 1 to 12, wherein an optical system (19) lies between the sample and the image sensor, the optical system defining an image plane and an object plane, and wherein, in step b), the image is acquired in a defocused configuration, the detection plane being offset with respect to the image plane, and/or a plane of the sample, in which the sample lies, being offset with respect to the object plane.

15. Device (10) for observing a sample, the sample comprising particles, the device comprising:

- a light source (11), configured to illuminate the sample;
- a sample holder (10s), configured to receive the sample;
- an image sensor (16), placed such that when the sample is placed on the holder, it lies between the image sensor and the light source, the image sensor being configured to acquire an image of the sample;
- a processor (20), configured to implement steps d) to h) of any one of the preceding claims, on the basis of an estimation of a position of at least one particle in the detection plane or in a plane parallel to the detection plane, and on the basis of an image acquired by the image sensor.

16. Device according to Claim 15, wherein no image-forming optic is placed between the image sensor and the processor.

17. Device according to Claim 15, comprising an optical system (19) lying between the sample and the image sensor, the optical system defining an image plane and an object plane, the device comprising a means for adjusting the optical system, or the sample, or the image sensor, such that:

- the detection plane is offset from the image plane;
- and/or the object plane is offset from a plane of the sample, in which the sample lies.

**Fig. 1**

**Fig. 2A**

**Fig. 2D**

**Fig. 2B**

**Fig. 2E**

**Fig. 2C**

**Fig. 2F**

**Fig. 3A**

**Fig. 3B**

**Fig. 3C**

**Fig. 3D**

**Fig. 3E**

**Fig. 3F**

100

↓

110

↓ $I_o$

120

↓ $I'$

130

↓ $(x_i, y_i)$

140

↓ $F_{x_i, y_i}$

150 ←

90

↓ $par$

95

↓ $F(par)$

↓ $par_i$

**Fig. 4A**

100

↓

110

↓ $I_o$

120

↓ $I'$

130

↓ $(x_i, y_i)$

140

↓ $F_{x_i, y_i}$

150

151

↓ $F(par^q)$

152

↓ $\varepsilon^q, \nabla \varepsilon^q$

153

$par^{q+1}$

↓ $par_i$

**Fig. 4B**

**Fig. 4C**

**Fig. 4D**

**Fig. 5A**

**Fig. 5B**

**Fig. 5C**

**Fig. 6A**

**Fig. 6B**

**Fig. 7**

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016097092 A
- WO 2016151249 A
- WO 2016151248 A
- WO 2017178723 A
- WO 2016189257 A
- WO 2017162985 A
- WO 2017050672 A

**Littérature non-brevet citée dans la description**

- **THOMAS O.** Optimizing phase object reconstruction using an in-line digital holographic microscope and a reconstruction based on a Lorenz-Mie model. *SPIE, US,* 24 Mai 2018, vol. 10677